Europäisches Patentamt

European Patent Office

Office européen des brevets

(19)

(11) Publication number: **0 614 920 A1**

## EUROPEAN PATENT APPLICATION

(12)

(21) Application number: **94200628.9**

(22) Date of filing: **10.03.94**

(51) Int. Cl.5: **C08F 263/02**

(30) Priority: **12.03.93 EP 93200736**

(43) Date of publication of application:
**14.09.94 Bulletin 94/37**

(84) Designated Contracting States:
**BE CH DE ES FR GB IT LI NL SE**

(71) Applicant: **SHELL INTERNATIONALE RESEARCH MAATSCHAPPIJ B.V.
Carel van Bylandtlaan 30
NL-2596 HR Den Haag (NL)**

(72) Inventor: **Heymans, Denis Marie Charles
Avenue Jean Monnet 1
B-1348 Ottignies Louvain-La-Neuve (BE)**

(54) **A latex composition containing polymer particles having core/shell structure.**

(57) This invention relates to a latex composition containing polymer particles having core/shell structure, obtainable by sequential aqueous emulsion polymerization of a monomer mixture (A) to prepare a core polymer having a glass transition temperature (Tg) of more than 13 °C, and a monomer mixture (B) to prepare a shell polymer having a Tg of less than 13 °C, provided that the difference in Tg is at least 5 °C, to paints, lacquers, adhesives, paper and textile coatings, comprising said latex composition, and to core/shell particles obtainable by (spray-)drying the latex composition.

EP 0 614 920 A1

Rank Xerox (UK) Business Services
(3.10/3.09/3.3.4)

This invention relates to a latex composition containing polymer particles having core/shell structure. More particularly, the invention relates to latices containing polymer particles obtainable by a sequential aqueous emulsion polymerization of two monomer mixtures each comprising vinylesters of saturated secondary and/or tertiary monocarboxylic acids.

Conventional latex compositions are used in particular as binder in emulsion paints. When a wet latex film is applied, water evaporates allowing the polymer particles to coalesce. The result of this physical phenomenon, provided the particles are sufficient soft to coalesce, is a dry polymer film. The process of film formation is very important as it determines the film properties and the performance of the final product. The readiness with which the film is formed is related to the glass transition temperature (Tg) of the polymer and there is a minimum film formation temperature (MFT) below which the particles do not coalesce. Ideally, the MFT is low, ensuring applicability at both outdoor and indoor temperatures. On the other hand, a low Tg results in a tacky film, which is undesirable for coatings. Hence, the Tg should be high, preferably above the room temperature.

The quality of a final film depends on a good balance between its rigidity and its flexibility. To guarantee good film formation (requiring "soft" particles) combined with a sufficient rigidity, three solutions have been proposed:

- the addition to the paint of a few percent of co-solvent (coalescing agent). However, these volatile organic products can be toxic and contribute to the pollution of the environment.
- the use of polymer latices that by proper composure of specific monomer mixtures combine a desirable balance of rigidity and flexibility at room temperature. However, such latices have only found application in specialty coatings as a result of their relatively high price.
- the use of core/shell latex manufacturing technology.

The solution that appears most promising is that of employing latex compositions comprising particles with a core/shell structure.

Core/shell polymers are described in the Journal of Macromolecular Science - Chem. A7(3), 623-646 (1973) by D.J. Williams et al. The core/shell polymer particles suitably used as binder in coatings generally are heterogeneous particles which have a core of a relatively hard polymeric material (high Tg) surrounded by one or more shells of a further, more flexible polymeric material (low Tg). The latter material is then selected for its ease of coalescence at low temperatures (low MFT). When employed as adhesive, etc. instead of as binder in coatings, other combinations are also known (e.g. the core/shell particles disclosed in (former) East German patent No. 213,224, in European patent application Nos. 0,267,726 and 0,308,735, or in US patent No. 4,091,162).

The use of core/shell latex manufacturing technology, however, is still a long way from maturity. For instance, the selection of suitable monomers is still meagre. This is not in the least due to the difficulty of producing a core/shell particle instead of either a blend of different particles or a homogeneous particle not having a core/shell structure. The (co)monomer mixtures used should be incompatible, but only to a certain degree. This incompatibility is generally provided through differences in hydrophilic character.

However, although incompatible mixtures may result in particles having a core/shell structure, such particles not necessarily make up a latex having acceptable coating properties.

Contrarily, such mixtures may be unacceptable for their price and/or difficulty in handling. Finally, even when particles with core/shell structure are produced, phase inversion may occur inadvertently, whereby the potential, desired properties are still not achieved.

Thus, in European patent application No. 0,031,964 and in US patent No. 4,150,005 a core/shell particle is produced by a sequential emulsion polymerization process of first one or more hydrophilic monomers, followed with one or more hydrophobic monomers (a so called "inverted core/shell", as the phase being the shell is prepared first). The particles therein disclosed have a core phase which -to ensure phase inversion- is very hydrophobic. The nature of the process however, limits the selection of monomers. In particular core/shell polymer particles wherein each phase comprises vinylesters of saturated secondary and/or tertiary monocarboxylic acids containing 5 to 20 carbon atoms in the acid moiety are thereby excluded.

This is undesirable as such monomers are known to provide excellent coating properties, in particular in respect of alkali and UV resistance.

In European patent application No. 0,145,325 a continuous process is described, which could also be used for making core/shell polymers with a vinyl acetate core and a vinyl acetate/VeoVa (tm) shell or a vinyl acetate/VeoVa (tm) core and a methyl methacrylate shell (page 15). This application is however silent on how such core/shell polymers should be made, and what properties could be expected from such core/shell polymers, therefore lacking any incentive to prepare the same.

In European patent application No. 0,444,827, the core is formed from a comonomer mixture comprising i.a. the hydrophobic C2 to C4 alkene and a vinyl silane, whereas the shell is formed from a vinyl C1-C4 alkanoate only. Copolymerization with gaseous alkenes is known to be notoriously more complex and difficult, whereas the vinyl silane is a relatively costly comonomer. Moreover, a limitation of the shell layer to the aforementioned vinyl alkanoates seriously affects the properties of the resulting coatings.

In European patent application No. 0,507,634, both the core and shell part of the particles are composed of acrylic polymers having different Tg's. Although acrylic paints are highly cost-competitive, and provide in many aspects acceptable properties, they also are known to be less desirable in respect of toxicity.

Moreover, the high amount of acrylic acid monomers limits the applicability of vinylesters as comonomers due to the latter being hydrolyzable in the presence of large amounts of acrylic acid.

Finally in US patent No. 4,391,928 opacifying and film-forming particles are disclosed comprising a solid polymeric core, having a Tg preferably in excess of 80 °C, surrounded by a solid polymeric shell having a Tg less than about 45 °C. Such particles are not sufficient by themselves to provide latices suitable for coating and require an additional binder component.

It is therefore still desired to have a latex composition, produced from relatively cheap, non-toxic starting material, which is easy to handle (stability) and to apply (low MFT), which is free from toxic or environmentally less accepted coalescing agents, and allows the production of a tack-free film (high Tg), which film is both sufficient flexible and rigid and has excellent further coating properties (alkali and water spot resistance, weatherability, etc.).

As a result of extensive research and experimentation such a latex composition has now been found. Accordingly, the invention provides a latex composition containing polymer particles having core/shell structure, obtainable by sequential aqueous emulsion polymerization of a monomer mixture (A) to prepare a core polymer having a glass transition temperature (Tg) of more than 13 °C, and a monomer mixture (B) to prepare a shell polymer having a Tg of less than 13 °C, provided that the difference in Tg is at least 5 °C, wherein the monomer mixture (A) is composed of:

a1) from 50 to 90 %wt of one or more vinyl C1 to C4 alkanoates,
a2) from 10 to 50 %wt of one or more vinyl esters of saturated secondary and/or tertiary monocarboxylic acids containing 5 to 20 carbon atoms in the acid moiety,
a3) from 0 to 40 %wt of one or more C1 to C12 alkyl (meth)acrylates,
a4) from 0 to 10 %wt of one or more C3 to C5 alpha,beta-unsaturated mono- or dicarboxylic acids, and
a5) from 0 to 5 %wt of one or more monomers selected from the group comprising acrylamide, methacrylamide, and sodium vinyl sulphonate;

wherein the monomer mixture (B) is composed of:

b1) from 0 to 60 %wt of one or more vinyl C1 to C4 alkanoates,
b2) from 40 to 100 %wt of one or more vinyl esters of saturated secondary and/or tertiary monocarboxylic acids containing 5 to 20 carbon atoms in the acid moiety,
b3) from 0 to 40 % of one or more C1 to C12 alkyl (meth)acrylates,
b4) from 0 to 10 %wt of one or more C3 to C5 alpha,beta-unsaturated mono- or dicarboxylic acids, and
b5) from 0 to 5 %wt of one or more monomers selected from the group comprising acrylamide, methacrylamide, and sodium vinyl sulphonate;

and wherein the shell comprises from 25% to 70% by weight of the total polymer particle.

The Tg depends in particular on the choice and relative amounts of monomer in a selected monomer mixture and hardly on the process conditions. The Tg may even be predicted with the empirical equation developed by T.G. Fox (T.G. Fox, Bull. Am. Phys. Soc., $\underline{1}$, 123 (1956) or any other equation well known by the skilled man.

Note that the monomer mixtures A and B are chosen to provide a difference in Tg of at least 5 °C, preferably at least 10 °C, and therefore may not be the same for a given core/shell particle.

Components a1) and b1) suitably are vinyl formate, vinyl acetate, vinyl propionate, vinyl butyrate and mixtures thereof.

Vinyl acetate, because of its availability and cost, is most preferred.

Although components a2) and b2) are of the same class of vinyl esters, the relatively more branched, "rigidifying" vinyl esters, imparting a higher Tg, are preferred as component a2), whereas the relatively more linear, "softening" vinyl esters are preferred as component b2). Nevertheless, for cost reasons, also softening vinyl esters may be used in as component a2). Since imparting the desirable film properties to a larger extent, vinyl esters of saturated tertiary monocarboxylic acids are preferred.

Preferably, the component a2) is a vinyl ester of a saturated tertiary monocarboxylic acid containing 9 or 10 carbon atoms in the acid moiety (such as VeoVa 9 or VeoVa 10; VeoVa is a trademark).

Preferably, the component b2) is selected from vinyl esters of saturated secondary monocarboxylic acids such as the vinyl ester of 2-ethylhexanoic acid (VEHA) and/or (more preferably) saturated tertiary monocarboxylic acids containing 10, 11 or 13 carbon atoms in the acid moiety (such as VeoVa 10, VeoVa 11 or VeoVa 13; VeoVa is a trademark).

Note that with the monomer mixtures (A) and (B) used in the preparation of the latices of the present invention, it is highly surprising that a core/shell structure is formed at all, as they are similar in composition. Indeed, contrary to popular belief, particles with a core/shell structure comprising a shell polymer that is more hydrophobic than the core have been prepared. Such particles were previously thought to undergo phase-inversion.

Components a3) and b3) are suitably selected from methyl acrylate, methyl methacrylate or ethyl acrylate ("rigid" or "hard" monomers), (iso)butyl acrylate, (iso)butyl methacrylate, 2-ethylhexyl acrylate (relatively "soft" monomers) or mixtures thereof.

For component a3), methyl methacrylate giving the best UV resistance is preferred. In addition, it has been found the butyl acrylate and/or 2-ethylhexyl acrylate as component a3) but in particular as component b3) provides the latex compositions with a highly desirable balance of properties.

Components a4) and b4), if present, preferably are acrylic acid.

Preferably, the monomer mixture (A) used in preparing the latex composition is composed of:

a1) from 50 to 90 %wt of one or more vinyl C1 to C4 alkanoates,

a2) from 10 to 50 %wt of one or more vinyl esters of saturated tertiary monocarboxylic acids containing 5 to 20 carbon atoms in the acid moiety,

a3) from 0 to 5 %wt of one or more C1 to C8 alkyl (meth)acrylates,

a4) from 0 to 2 %wt of one or more C3 to C5 alpha,beta-unsaturated monocarboxylic acids, and

a5) from 0 to 1 %wt of one or more monomers selected from the group comprising acrylamide, methacrylamide, and sodium vinyl sulphonate.

Similarly preferred, the monomer mixture (B) used in preparing the latex composition is composed of:

b1) from 10 to 50 %wt of one or more vinyl C1 to C4 alkanoates,

b2) from 50 to 90 %wt of one or more vinyl esters of saturated tertiary monocarboxylic acids containing 5 to 20 carbon atoms in the acid moiety,

b3) from 1% to 10% of one or more alkyl C1 to C8 (meth)acrylates,

b4) from 0 to 2 %wt of one or more C3 to C5 alpha,beta-unsaturated monocarboxylic acids, and

b5) from 0 to 1 %wt of one or more monomers selected from the group comprising acrylamide, methacrylamide, and sodium vinyl sulphonate.

Suitably, the shell of the core/shell particle comprises from 30 to 60 %wt of the total polymer particle. More suitably, the Tg of the core is at least 15 °C.

It is also known that copolymers of vinylesters of saturated secondary and/or tertiary monocarboxylic acids, vinyl acetate and optional other copolymerizable monomers possess properties making them highly suitable for, amongst others, coating applications. European patent application Nos 295,727; 315,278; 376,411; 513,889; 516,201; and 516,202, using different VeoVa (tm) monomers, showed these copolymers to be highly versatile, of excellent suitability, and reasonable priced. However, none of these documents mention the possibility of applying the same to prepare latices of polymer particles with core/shell structure.

Methods for preparing the latex compositions in accordance with the present invention are well-known in the art. For instance the aforementioned EP-A-0,444,827 refers to Polymer Synthesis (vols I and II) by Sandler & Karo (Academic press 1974), Preparative Methods of Polymer Chemistry (2nd Ed.) by Sorenson and Campbell (Interscience 1968) and Methoden der Organischen Chemie (Houben-Weyl), Band XIV.

The latex compositions in accordance with the present invention are usable in paints, lacquers, adhesives, paper and textile coatings etc., but preferably in co-solvent free paints. The paint composition will generally comprise in addition to the core/shell polymer thickeners, dispersants, defoamers, preservatives, pigments, fillers, corrosion inhibitors and optionally other ingredients known in the art. In addition, the core/shell particles may be isolated by (spray-)drying the latex composition, and used as filler material etc. in for instance reinforced polymers.

The invention will now be further described with reference to the following examples, however without restricting its scope to these specific embodiments.

Examples

Equipment

A three litre reaction flask fitted with a reflux condenser, stirrer, thermometer, and monomer and initiator inlet tubes was used in all examples. A piston pump was used to allow the introduction of the core respectively the shell monomer pre-emulsion into the reaction flask. The reaction flask was heated in a water bath containing a heating element.

Preparation

The reaction flask was swept with nitrogen, and the following initial reactor charge was added:

| IRC | Water, demineralized | 245 grams |
| | Humifen FS90*, 10% aqueous solution | 5 |
| | Potassium persulphate | 1 |

\* Humifen FS90 is a trademark for an alkaryl sulphonate anionic surfactant; and Arkopol N230 is a trademark for a non-ionic surfactant.

The IRC was heated to about 80 °C. In the meantime, monomer pre-emulsions were prepared of respectively a core monomer mixture A and a shell monomer mixture B by mixing the following ingredients in the given amounts,

| Aqueous phase | Water, demineralized | 600 grams |
| | Humifen FS90*, 10% aqueous solution | 95 |
| | Arkopal N230*, 25% aqueous solution | 80 |
| | Potassium persulphate | 4 |
| | Potassium carbonate | 4, |

\* Humifen FS90 is a trademark for an alkaryl sulphonate anionic surfactant; and Arkopol N230 is a trademark for a non-ionic surfactant.

dividing this aqueous phase in two portions A and B proportionally to the amount of the respective monomer mixtures, and adding 500 grams of monomer mixture A or B as set out in Table 1 to the agitated aqueous phase.

Polymerization procedure

As soon as the temperature of the IRC reached 80 °C, the addition of the monomer pre-emulsion was started whilst maintaining a temperature of about 80 °C. In case of direct core/shell, polymerization started with the addition of the monomer pre-emulsion A. Alternatively, in case of inverted core/shell, polymerization started with the addition of the monomer pre-emulsion B. The total addition time of the pre-emulsion was two hours. After the end of the addition period, the temperature was maintained at about 80 °C for another two hours.

Examples 1-4

The composition of the monomer pre-emulsions is set out in Table 1. Example 1 concerns a direct core/shell latex. Examples 2 to 4 concern inverted core/shell latices of different composition.

All latices were produced in accordance with the polymerization procedure. The properties of the latices and films prepared thereof are also presented in Table 1. It is in particular observed that the presence of butyl acrylate has a beneficial effect on the properties of the latex composition. The somewhat high score in respect of alkali film extraction of Example 1 is related to the amount of acrylic acid used. Nonetheless, for a film prepared from a direct core/shell latex this is still acceptable.

Example 5, Comparative examples I-IV

Example 5 was produced similar to Examples 1-4. Comparative examples I and II are of the same compositions as respectively the shell or core of the particle of Example 5. Comparative example III is a conventional latex composition. Comparative example IV is a blend of the latex compositions of Comparative examples I and II.

Both the composition and the properties of the latices and films prepared thereof are presented in Table 2.

From Table 2 it may be concluded that the core/shell polymer (Example 5) behaves differently (i.e., has a more desirable balance of properties) from the polymers of the Comparative examples.

Notably, the MFT of comparative example II and III is too high, the Tg and hardness of Comparative example I is too low, and the water spot resistance and alkali film extraction of Comparative example IV is also unacceptable (respectively too low and too high).

**TABLE 1**

| Polymer latices | 1 | 2 | 3 | 4 |
|---|---|---|---|---|
| **Core (Monomer mixture A)** Monomer composition (grams) | | | | |
| vinyl acetate | 347.5 | 345.0 | 345.0 | 414.0 |
| VeoVa 9 (tm) | 150 | 150.0 | | |
| VeoVa 10 (tm) | | | 150.0 | 180.0 |
| VeoVa 11 (tm) | | | | |
| butyl acrylate | | 5.0 | 5.0 | 6.0 |
| acrylic acid | 2.5 | 5.0 | 5.0 | 6.0 |
| **Shell (Monomer mixture B)** Monomer composition (grams) | | | | |
| vinyl acetate | 130.0 | 140.0 | 145.0 | 134.0 |
| VeoVa 10 (tm) | 350.0 | 350.0 | 225.0 | 132.0 |
| VeoVa 11 (tm) | | | 125.0 | 132.0 |
| butyl acrylate | | 5.0 | 5.0 | 2.0 |
| acrylic acid | 20 | 20 | 20 | 20 |
| **Latex properties** | | | | |
| Minimum film forming temperature (°C) | 10.5 | 7.5 | 1.0 | 0.5 |
| **Polymer properties** | | | | |
| $T_g$ (°C) measured by D.S.C. | 10.3/31.4 | 12.2/32.9 | -2.5/17.5 | 2.0/19.5 |
| Hardness König ($s^{-1}$) | 31 | 27 | 7 | 8 |
| Water spot resistance (24 hr exposure) | 3 | 6 | 7 | 9 |
| Water absorption (%) | 56 | 128 | 186 | 188 |
| Alkali film extraction (%) | 12.9 | 0.0 | 0.0 | 0.0 |

## TABLE 2

| Polymer latices | I | II | III | 5 | IV |
|---|---|---|---|---|---|
| | Monomer composition (weight %) | | | | |
| vinyl acetate | 28 | 68.8 | 48.5 | 48.5 | 48.4 |
| VeoVa 10 (tm) | 70 | -- | 35 | 35 | 35 |
| VeoVa 9 (tm) | -- | 30 | 15 | 15 | 15 |
| methyl methacrylate | 1 | 1 | 1 | 1 | 1 |
| acrylic acid | 1 | 0.2 | 0.5 | 0.5 | 0.6 |
| | Latex properties | | | | |
| Minimum film forming temperature (°C) | 2 | 25 | 14.5 | 8.5 | 3 |
| | Polymer properties | | | | |
| $T_g$ (°C) measured by D.S.C. | 8.0 | 34.6 | 22.1 | 12.3/33.0 | 10.5/36.6 |
| Hardness König ($s^{-1}$) | 4 | 101 | 34 | 23 | 55 |
| Water spot resistance (1 hr exposure) | 10 | 9.5 | 10 | 10 | 6 |
| Water spot resistance (24 hrs exposure) | 6 | 6 | 6 | 7 | 6 |
| Water absorption (%) | 135 | 44 | 167 | 112 | 20 |
| Alkali film extraction (%) | 0.3 | 1.4 | 0.6 | 0.5 | 8.1 |

Example 6

A core/shell latex was made with the vinyl ester of 2-ethylhexanoic acid (VEHA) as soft monomer, using the equipment as set out above, however, employing the following recipe:

| IRC | Water, demineralized | 673 grams |
|---|---|---|
| | Humifen FS90*, 10% aqueous solution | 30 |
| | Arcopal N230, 25% aqueous solution | 80 |
| | Potassium persulphate | 1 |
| | di-sodium tetraborate decahydrate | 5 |
| | Natrosol 250 L* | 20 |
| | Acetic acid | 2 |

\* Humifen FS90 is a trademark for an alkaryl sulphonate anionic surfactant; Arkopol N230 is a trademark for a non-ionic surfactant, and Natrosol 250 L is a trademark for a hydroxyethyl cellulose.

The IRC was heated to about 74-77 °C. In the meantime, monomer mixtures were prepared of respectively a core monomer mixture A composed of 50 grams VeoVa 10 (tm) and 450 grams vinyl acetate, and a shell monomer mixture B composed of 300 grams VEHA and 200 grams vinyl acetate. Moreover, an initiator solution was prepared composed of 120 grams of demineralized water and 2.3 grams of potassium persulphate.

Polymerisation procedure:

As soon as the temperature of the IRC reached 74-77 °C, 100 grams out of monomer mixture B was added to the agitated IRC. After about 10 minutes reaction of this initial monomer charge, addition of the remaining of monomer charge B and of the initiator solution were started. The reactor temperature was then brought to 80 °C. When completed, the addition of monomer charge B was followed by addition of monomer charge A. The total addition time of the monomer charges was two hours. The total addition time of the initiator solution was two hours and 15 minutes. When addition of the monomers was completed, temperature was maintained at 80 °C for another two hours.

Comparative example V

A conventional latex having the same overall composition as the latex of Example 6 was made.

The IRC was heated to about 74-77 °C. In the meantime, a monomer mixtures was prepared of 50 grams VeoVa 10 (tm), 650 grams vinyl acetate and 300 grams VEHA. Moreover, an initiator solution was prepared composed of 120 grams of demineralized water and 2.3 grams of potassium persulphate.

Polymerisation procedure:

As soon as the temperature of the IRC reached 74-77 °C, 100 grams out of the monomer mixture was added to the agitated IRC. After about 10 minutes reaction of this initial monomer charge, addition of the remaining of monomer mixture was started. The reactor temperature was then brought to 80 °C. The total addition time of the monomer mixture was two hours. The total addition time of the initiator solution was two hours and 15 minutes. When addition of the monomer mixture was completed, temperature was maintained at 80 °C for another two hours.

| Properties: | Example 6 | V |
|---|---|---|
| Minimum film forming temperature (°C) | 2.6 | 7.1 |
| Tg (°C) measured by D.S.C. | 3/22.5 | 14.5 |
| Hardness König (s$^{-1}$) | 10 | 10 |
| Water spot resistance (1 hour exposure) | 6 | 6 |
| Water absorption (%) | 114 | 147 |
| Alkali film extraction (%) | 1.0 | 0.0 |
| (Note that Example 6 has a better balance of properties than Comparative Example V, but that both score somewhat less in respect of the water spot resistance than Examples 1 to 5 due to the presence of Natrosol 250 L (tm)) | | |

TEST METHODS

The glass transition temperature (Tg) is measured by means of Differential Scanning Calorimetry (DSC), by subjecting the polymer under helium atmosphere to a temperature range of -40 to 120 °C at a warming-up speed of 20 °C/min. The reported values are so-called second scan figures.

The minimum film forming temperature (MFT) is measured on an apparatus with a non-porous surface (SS.3000 from Sheen Instruments Ltd.), which surface has a temperature gradient. Latices are drawn down on the surface to give a 30 micron wet film, which film is dried with the help of air flow. MFT is determined visually, i.e., at the point corresponding to a given temperature at which the film cracks, indicating incomplete coalescence.

To measure the water absorption of latex polymer films (Thick film test method) a wet film of 200 micron thickness is applied on a polyethylene foil and allowed to dry above its MFT. The film is then stored for one week at 40 °C. Three pieces of 2 x 2 cm are cut from the dried film and weighed to the nearest 0.1 mg. The pieces are soaked in demineralized water for 14 days at 23 °C. After this period, the excess water is removed with filter paper and the pieces are immediately reweighed. The water absorption is calculated in percent from the observed weight increase. The result of the triplicate measurements are averaged.

The water spot resistance of latex polymer films is determined by applying a wet latex film of 200 micron on a glass panel and allowing the same to dry for a week at 40 °C. After this period, the film is cooled to 23 °C and a drop of water is brought on the film. The panel is placed on a dark underground. After 60 minutes the whitening effect is visually judged. If the film is undamaged after one hour, it is worthwhile to continue the test for another 23 hours. The water droplet is then covered by a watch glass to avoid evaporation. A visual rating is given between 0, if the film is completely white and 10 when the film is unaffected.

The alkali extractable contents is determined as follows. A pre-weighed film, 2 x 2 cm, identically prepared to that used for the water absorption determination is immersed in 2% m/m sodium hydroxide solution for 2 weeks, then rinsed with clean water and dried to constant weight. The weight loss is determined in triplicate and expressed in percentage of its original weight.

The hardness of the film is measured as König hardness (DIN 53157), determined using an Erichson (trademark) apparatus. Thereto a latex polymer film is applied with a 200 $\mu$m applicator onto a glass panel. After the film is formed, the panel is put into an oven for 1 week at 40 °C, followed by acclimatization for 1 week to 23 °C. After this period the König hardness (pendulum) is determined and calculated versus a glass panel standard as

$$C_p \frac{250}{C_s} \ [-]$$

where $C_p$ and $C_s$ represent the number of counts respectively of the glass standard and the test panel.

**Claims**

1. A latex composition containing polymer particles having core/shell structure, obtainable by sequential aqueous emulsion polymerization of a monomer mixture (A) to prepare a core polymer having a glass transition temperature (Tg) of more than 13 °C, and a monomer mixture (B) to prepare a shell polymer having a Tg of less than 13 °C, provided that the difference in Tg is at least 5 °C, wherein the monomer mixture (A) is composed of:

   a1) from 50 to 90 %wt of one or more vinyl C1 to C4 alkanoates,

   a2) from 10 to 50 %wt of one or more vinyl esters of saturated secondary and/or tertiary monocarboxylic acids containing 5 to 20 carbon atoms in the acid moiety,

   a3) from 0 to 40 %wt of one or more C1 to C12 alkyl (meth)acrylates,

   a4) from 0 to 10 %wt of one or more C3 to C5 alpha,beta-unsaturated mono- or dicarboxylic acids, and

   a5) from 0 to 5 %wt of one or more monomers selected from the group comprising acrylamide, methacrylamide, and sodium vinyl sulphonate;

   wherein the monomer mixture (B) is composed of:

   b1) from 0 to 60 %wt of one or more vinyl C1 to C4 alkanoates,

b2) from 40 to 100 %wt of one or more vinyl esters of saturated secondary and/or tertiary monocarboxylic acids containing 5 to 20 carbon atoms in the acid moiety,

b3) from 0 to 40 % of one or more C1 to C12 alkyl (meth)acrylates,

b4) from 0 to 10 %wt of one or more C3 to C5 alpha,beta-unsaturated mono- or dicarboxylic acids, and

b5) from 0 to 5 %wt of one or more monomers selected from the group comprising acrylamide, methacrylamide, and sodium vinyl sulphonate;

and wherein the shell comprises from 25% to 70% by weight of the total polymer particle.

2.  A latex composition as claimed in claim 1, wherein component a2) and/or b2) is selected from vinyl esters of saturated tertiary monocarboxylic acids containing 5 to 20 carbon atoms in the acid moiety.

3.  A latex composition as claimed in claim 2, wherein the monomer mixture (A) is composed of:

a1) from 50 to 90 %wt of one or more vinyl C1 to C4 alkanoates,

a2) from 10 to 50 %wt of one or more vinyl esters of saturated tertiary monocarboxylic acids containing 5 to 20 carbon atoms in the acid moiety,

a3) from 0 to 5 %wt of one or more C1 to C8 alkyl (meth)acrylates,

a4) from 0 to 2 %wt of one or more C3 to C5 alpha,beta-unsaturated monocarboxylic acids, and

a5) from 0 to 1 %wt of one or more monomers selected from the group comprising acrylamide, methacrylamide, and sodium vinyl sulphonate.

4.  A latex composition as claimed in claim 2 or 3, wherein the monomer mixture (B) is composed of:

b1) from 10 to 50 %wt of one or more vinyl C1 to C4 alkanoates,

b2) from 50 to 90 %wt of one or more vinyl esters of saturated tertiary monocarboxylic acids containing 5 to 20 carbon atoms in the acid moiety,

b3) from 1% to 10% of one or more alkyl C1 to C8 (meth)acrylates,

b4) from 0 to 2 %wt of one or more C3 to C5 alpha, beta-unsaturated monocarboxylic acids, and

b5) from 0 to 1 %wt of one or more monomers selected from the group comprising acrylamide, methacrylamide, and sodium vinyl sulphonate.

5.  A latex composition as claimed in any one of claims 1 to 4, wherein the monomer a2) is a vinyl ester of a saturated tertiary monocarboxylic acid containing 9 or 10 carbon atoms in the acid moiety.

6.  A latex composition as claimed in any one of claims 1 to 5, wherein the monomer b2) is a vinyl ester of 2-ethylhexanoic acid and/or a saturated tertiary monocarboxylic acid containing 10, 11 or 13 carbon atoms in the acid moiety.

7.  A lates composition as claimed in any one of claims 1 to 6, wherein the monomer a3) and/or b3) is butyl acrylate and/or 2-ethylhexyl acrylate.

8.  A latex composition as claimed in any one of claims 1 to 7, wherein the shell comprises from 30 to 60 %wt of the total polymer particle.

9.  A latex composition as claimed in any one of claims 1 to 8, wherein the core polymer has a Tg of more than 15 °C.

10. Paints, lacquers, adhesives, paper and textile coatings, comprising in addition to the usual additives a latex composition as claimed in any one of claims 1 to 9.

11. Core/shell particles obtainable by (spray-)drying the latex composition as claimed in any one of claims 1 to 9.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| D,Y | EP-A-0 444 827 (VINAMUL)<br>* page 2, line 18 - line 50 *<br>--- | 1-11 | C08F263/02 |
| D,Y | EP-A-0 145 325 (REED INTERNATIONAL)<br>* page 15, line 4 - line 10 *<br>----- | 1-11 | |
| | | | TECHNICAL FIELDS SEARCHED (Int.Cl.5) |
| | | | C08F |

The present search report has been drawn up for all claims

| Place of search | Date of completion of the search | Examiner |
|---|---|---|
| THE HAGUE | 21 April 1994 | Andriollo, G |

EPO FORM 1503 03.82 (P04C01)